(19) Europäisches Patentamt
European Patent Office
Office européen des brevets

(11) **EP 3 445 131 B1**

(12) **EUROPEAN PATENT SPECIFICATION**

(45) Date of publication and mention
of the grant of the patent:
**23.09.2020 Bulletin 2020/39**

(21) Application number: **17186654.4**

(22) Date of filing: **17.08.2017**

(51) Int Cl.:
*H04W 88/10* (2009.01)       *H04W 84/12* (2009.01)
*H04W 28/02* (2009.01)       *H04W 48/20* (2009.01)
*H04W 36/06* (2009.01)       *H04W 28/08* (2009.01)
*H04W 40/12* (2009.01)       *H04W 36/36* (2009.01)
*H04W 36/22* (2009.01)       *H04W 36/32* (2009.01)

(54) **FREQUENCY BAND STEERING OF STATIONS IN A WIRELESS NETWORK**

FREQUENZBANDSTEUERUNG VON STATIONEN IN EINEM FUNKNETZWERK

DIRECTION DE BANDE DE FRÉQUENCE DE STATIONS DANS UN RÉSEAU SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.02.2019 Bulletin 2019/08**

(73) Proprietor: **Nokia Solutions and Networks Oy
02610 Espoo (FI)**

(72) Inventor: **Ligata, Amir
2018 Antwerpen (BE)**

(74) Representative: **IP HILLS NV
Hubert Frère-Orbanlaan 329
9000 Gent (BE)**

(56) References cited:
**US-A1- 2016 007 278     US-B2- 8 699 418**

## Description

### Technical Field

The present disclosure generally relates to Wi-Fi networks comprising an access point, AP, and one or more associated devices, STAs, wherein the AP is operable in at least two frequency bands, e.g. the 2.4GHz and 5GHz frequency band. More particular, the disclosure relates to the switching of operating frequency bands of the STAs in such a network.

### Background

Wi-Fi networks continue to evolve by introducing new standards and steadily improving achievable throughput. Most of the APs currently support operation over two frequency bands, a lower frequency band, typically the 2.4GHz band, and a higher frequency band, typically the 5GHz band. The main difference between both frequency bands is reflected in achievable throughput and coverage range. The lower frequency band provides a larger coverage to its end users, whereas the higher frequency band offers a higher throughput.

A majority of STAs and/or client devices supports to operate over both frequency bands as well, hence leaving end users with an option to either connect to the lower frequency band or the higher one. The decision to connect to one of both frequency bands depends on a variety of parameters such as, for example, the end-user preferences, the mobility of the STA and/or the required data consumption at a given time frame.

Once an STA is connected to a frequency band, it remains connected to this band as long as its signal strength is above a sensitivity threshold. For instance, if a STA is operating at the lower frequency band and located close to the AP, it remains connected to the lower frequency band, although the higher frequency band would enable a higher throughput and consequently a better performance. On the other hand, an STA operating at the higher frequency band which moves away from the AP leaves at one point the coverage area of the higher frequency band resulting in a loss of connection. Subsequently, the STA reconnects to the AP, at that moment at the lower frequency band, and stays connected to the AP through this band.

In order to provide an optimal connection in the sense of throughput and/or coverage ranges, band steering mechanisms are utilised. For example, in US20150382348A1, band steering from the lower frequency band to the higher frequency band is instructed when the signal strength on the lower frequency band exceeds a threshold while the performance of the AP at the higher frequency band is simultaneously monitored. In WO2014142966A1 a steering to the higher frequency band is initiated based on an analysis of STAs traffic patterns and band capabilities in addition to signal strengths. A third way of managing band steering is disclosed in WO2016197331A1, wherein a band steering is based on a method comprising the sending of a request by an STA to the AP upon a degradation of channel quality parameters, such as for example received signal strength indicators, RSSIs, and/or error rates.

In US20160007278A1 systems and methods for instituting redistribution of wireless clients to improve service, thereby allowing a client to associate to at least one of, an AP, multiple APs working in concert, and a central entity, the AP, APs in concert, and the central entity being in connection with a network and deciding via the AP in connection with the network that an associated client should be redistributed based on a connection metric. The decision may be based on at least one of a probability calculation, network metric and a threshold comparison.

In US8699418B2 a computer-implemented method is disclosed comprising the steps of receiving a plurality of probe requests from a client device on a first wireless communication band for a wireless network, wherein the client device is capable of communication on both the first wireless communication band and a second wireless communication band; determining whether a number of plurality of probe requests on the first wireless communication band exceeds a threshold value; and when determining that the number exceeds the threshold value, transmitting a probe response on the first wireless communication band; and when determining that the number does not exceed the threshold value, refraining from transmitting a probe response on the first wireless communication band.

### Summary

The present band steering mechanisms however have some drawbacks. Firstly, when an STA is intensively moving around in the environment of the AP, its frequency band may continuously steer, especially if the STA is moving near the limit of the coverage range of the higher frequency band. This leads to a deteriorated user's quality of service since each steering event is accompanied by an interruption of the connection to the AP. Secondly, when an STA has a moderate movement pattern or is even not moving at all, it stays connected to one frequency band while an optimal connection would require a connection through the other one. Therefore, there is a need for a more optimal frequency band steering mechanism.

It is an object of the present disclosure to alleviate the above identified problems and to provide a band steering mechanism that provides an STA an optimal connection to the AP through either the lower or the higher frequency band.

This object is achieved, according to a first aspect, by the networking device of claim 1.

The AP is capable of operating in a higher and a lower frequency band. The lower frequency band is, for example, the 2.4GHz frequency band and the higher frequency band is, for example, the 5GHz frequency band. Next, STAs are connected to the AP. A number of the STAs are connected to the AP through the lower frequency band, while another part of the STAs are connected through the higher frequency band.

Next, the collection module of the networking device collects operating parameters from the AP and the STAs. Based on these operating parameters four scores are derived per STA, namely a mobility score, a coverage score, an activity score and a connection continuity score.

The mobility score reflects the mobility of the respective STA in the environment. It may be derived from a variation of RSSI values of the STA. In this way, it is derived whether the STA was stationary or moving around in the environment during the first time interval. If, for example, the variation of the RSSI values during the time interval is less than a predefined threshold, the STA is deemed as stationary. Another way of determining the mobility score may, for example, be based on a variation of the retransmission and/or error rate, whether or not combined with a second and/or higher derivative of the retransmission and/or error rate over the time period.

The coverage score reflects the STA proximity to the AP. If the STA is positioned close to the AP, it has a larger coverage score than when it is located further away from the AP. It may be derived from RSSI values of the STA and compared with the emitted signal strength power of the AP. The coverage score may thus, for example, be calculated as the difference between the emitted signal strength power of the AP and the RSSI values of the STA, whereby a mean value and standard deviation of the values during the time interval are further considered. Another way to derive a coverage score may, for example, again be based on a variation of the retransmission and/or error rate, whether or not combined with a second and/or higher derivative as done with the mobility score, whereby the results are interpreted differently compared to the mobility score.

The activity score reflects how active an STA is during the first time interval. It may, for instance, be calculated as a ratio of transmitted packets over received packets during this time interval.

The connection continuity score reflects how continuous the respective STA is connected to the AP during the first time interval. It may, for example, be calculated as the ratio of a connection time of the STA to the AP over to the first time interval.

Subsequently, the selection module selects a first selection of STAs within which each STA is connected to the AP at the lower frequency band during the predetermined first time interval. Furthermore, the STAs within this selection have a coverage, an activity and connection continuity score that exceeds a respective threshold and a mobility score that is below a predefined threshold.

Then, the classification module classifies the STAs of this first selection. This classification is based on roaming events during a second time interval which is larger than the first time interval employed by the selection module. Preferably, this second time interval is substantially larger than the first one.

A roaming event denotes a steering event of an STA, in other words, when the STA switches from the lower frequency band of the AP to the higher one and/or vice versa or when a STA switches from one radio of the AP to a radio of an extender or repeater.

Based on the number of roaming events during the second time interval, the STAs of the first selection are further classified as either static, minorly dynamic or majorly dynamic. The static STAs are STAs that have no roaming event during the second time interval, whereas for STAs having roaming events a further distinction is made between those who have a moderate amount of roaming events and those having an excessive amount of roaming events. STAs having a moderate amount of roaming events are classified as minorly dynamic, while majorly dynamic STAs have a larger amount of roaming events. The limit determining the amount of roaming events between the minorly and majorly dynamic STAs depends on the environment wherein the AP operates and on its capacity of, for example, coverage ranges of the frequency bands and/or on the number of STAs that can simultaneously be connected to the AP.

The networking device further comprises a radio analyser. The radio analyser forecasts the resources of the AP and calculates the required channel utilization of the static and minorly dynamic STAs. The forecasted resources of the AP comprise the available channel utilization of the AP prior to a steering of frequency bands. Based on the comparison between the required channel utilization and the forecasted resources, the steering module either steers all the frequency bands of the static and minorly dynamic STAs, or only from a part of them. The steering module thus applies a selection algorithm in order to determine from which STA of the group of static and minorly dynamic STAs a frequency band is steered. The selection algorithm compares, for example, the available channel utilization with the required channel utilization of STAs. This required channel utilization is either regarded as a whole or may be individualised per STA. Thus, when considering the STAs separately, a selection is made which is based on, for example, activity and/or required utility. Another way to distinguish between STAs may be based on priorities, which are, for example, deducted from service level agreements. In this way, a decision is made from which STAs the frequency band is steered from the lower frequency band to the higher frequency band. The selection algorithm may also steer frequency bands by merely comparing the available channel utilization with the required channel utilization as a whole. For example, when the available channel utilization of the AP at the higher frequency band is at least equal to the required channel utilization of the static and minorly dynamic STAs, all these STAs are instructed to steer their frequency band from the lower to the higher one. In the other condition, namely that the available channel utilization is less than the required channel utilization, only the static STAs are instructed to steer their frequency band from the lower one to the higher one.

Advantageously, the STAs in the environment are selected based on a variety of parameters. The subset of STAs, namely the first selection, comprises STAs that are connected to the lower frequency band, are fairly stationary and have a sufficiently high coverage score and activity factor. In other words, by determining this subset, the steering mechanism of the networking device focuses only on those STAs in the environment for which it is favourable to steer from the lower frequency band to the higher one. It is a waste of resources to extensively monitor a STA having, for example, a low activity factor or is not fairly stationary, since it is reasonable that such an STA is shortly shut down or either located away from the environment of the AP.

Next, by monitoring the roaming events of the STAs within this first selection, the STAs are classified in an even more detailed manner. Since the STAs are classified in either static or dynamic, the networking device is able to anticipate in the steering of the frequency band in an even more optimal way. For example, it is unlikely that an STA having no roaming events, thus a static STA, is moving away from the AP. Furthermore, since it belongs to the first selection, it is also located close to it. Therefore, in order to optimize its connection, the frequency band is steered from the lower to the higher one, for example, when it is selected by the selection algorithm.

The same reasoning counts for the minorly dynamic STAs. They are as well located close to the AP because they are also part of the first selection. Yet, although they are moving around in the environment, they also stay relatively close to the AP since the number of roaming events is limited. Consequently, the frequency band may be steered likewise from the lower to the higher one.

Obviously, notwithstanding the capacity of the AP, its resources are always limited. It is thus an advantage that the networking device also comprises a radio analyser, such that the resources are checked prior to the steering of the frequency band. In this way, an interruption or bad functioning of the AP is prevented.

According to an embodiment, the steering module is further configured to steer the frequency band of the static and minorly dynamic STAs from the lower frequency band to the higher frequency band when the available channel utilization is at least equal to the required channel utilization; or the frequency band of only the static STAs from the lower frequency band to the higher frequency band when the available channel utilization is less than the required channel utilization.

In other words, when the resources of the AP allow a complete steering of frequency bands, the frequency bands of the STAs of the group of static and minorly dynamic ones are steered at once. Otherwise, only the frequency bands of the static STAs are steered. In this way, a steering is instructed for a group of STAs in a fast way.

According to an embodiment, the operating parameters collected by the collection module comprises at least one of the group of a data consumption volume of the AP and/or the STAs, an operating frequency band of the AP and/or the STAs, an activity factor of the STAs and/or AP, a buffer state of the AP, a number of neighboring APs of the AP, a number of connected devices to the AP, a channel utilization parameter of the AP, a retransmission rate of the STAs, an authentication state of the STAs, an error rate of the STA, a hostname of the STAs, an operating standard of the STAs, a connection time of the STAs and/or received signal strength indications, RSSI, of the STAs.

The data consumption volume is the number of sent and received bytes in the predefined first time interval. The operating frequency band of the STAs and of the AP is collected as well. The activity factor is indicative for the percentage of time the channel is occupied by the AP's or STA's own activity. The buffer state is indicative for a number of packets buffered by the AP. The number of neighboring APs is the number of APs operating at a same and/or adjacent channel as the AP. The number of connected devices is the number of STAs connected to the AP during the first time interval. The channel utilization parameter is indicative for the percentage of channel busy-time of the AP as indicated by either a physical or virtual carrier sense mechanism. The retransmission rate of the STAs is indicative for the ratio of retransmitted packets over the total number of packets. The authentication state captures if the STA is authenticated by the AP. The error rate is indicative for a ratio of erroneously sent and/or received packets over the total sent and/or received packets. The hostname captures an identification of an STA. An STA may operate through different standards, which is captured by the operating standard of the STA. The connection time represents the time duration during which an STA is connected to the AP. RSSI levels are indicative for the strength of the signal between the STAs and the AP.

According to an embodiment, the networking device further comprises a tagging module configured to tag an STA as steering static thereby inhibiting the tagged STA to steer frequency bands; and wherein the steering module is further configured to instruct the tagging module to tag a static STA as steering static after the steering of the frequency band of the static STA from the lower to the higher frequency band.

In other words, once the frequency band of a static STA is steered from the lower one to the higher one, it is retained. In this way, the optimized connection of the static STA is retained as well since future roaming events are prevented. The frequency bands of the minorly dynamic STAs may, however, still be steered.

According to an embodiment, the steering module is further configured to steer the frequency band of the majorly dynamic STAs from the higher to the lower frequency band and subsequently to instruct the tagging module to tag the majorly dynamic STAs as steering static.

Since the majorly dynamic STAs are excessively moving around in the environment of the AP, it is likely that they will move out of the range of the coverage of the AP at the higher frequency band. The networking device thus anticipates to this occurrence and steers the frequency band from the higher to the lower one. Next, it is also tagged as steering static to prevent a steering back to the higher frequency band. Advantageously, resources of the AP at the higher frequency band are thus reserved for the static and minorly dynamic STAs.

In order to avoid that a steering static STA would perpetually be connected with the AP at a given frequency band, the networking device may be triggered periodically, for example, every twenty-four hours, such that the steering of frequency bands is executed all over again. The triggering may also be initiated upon an event, for example, the presences of neighboring APs or an increase of connected STAs.

According to an embodiment, the networking device further comprises a notification module configured to send a notification to an STA, the notification comprising instructions to a user of the STA to steer from a frequency band to another frequency band.

In other words, the band steering is either performed in an automated way or by sending instruction to a user of an STA which then performs the steering manually.

According to a second aspect the disclosure relates to the method of claim 8.

According to a third aspect, the disclosure relates to a computer program product comprising computer-executable instructions for performing the method according to the second aspect when the program is run on a computer.

According to a fourth aspect, the disclosure relates to a computer readable storage medium comprising the computer program product according to the third aspect.

According to a fifth aspect, the disclosure relates to a data processing system programmed for carrying out the method according to the second aspect.

**Brief Description of the Drawings**

Fig. 1 illustrates a computing system according to an embodiment of the invention and a Wi-Fi network; and

Fig. 2 illustrates signal strength values of Wi-Fi stations and coverages of frequency bands in different locations of a Wi-Fi network; and

Fig. 3 illustrates steps performed to trigger a frequency band steering of a station; and

Fig. 4 illustrates a suitable computing system for performing steps according to embodiments of the invention.

**Detailed Description of Embodiment(s)**

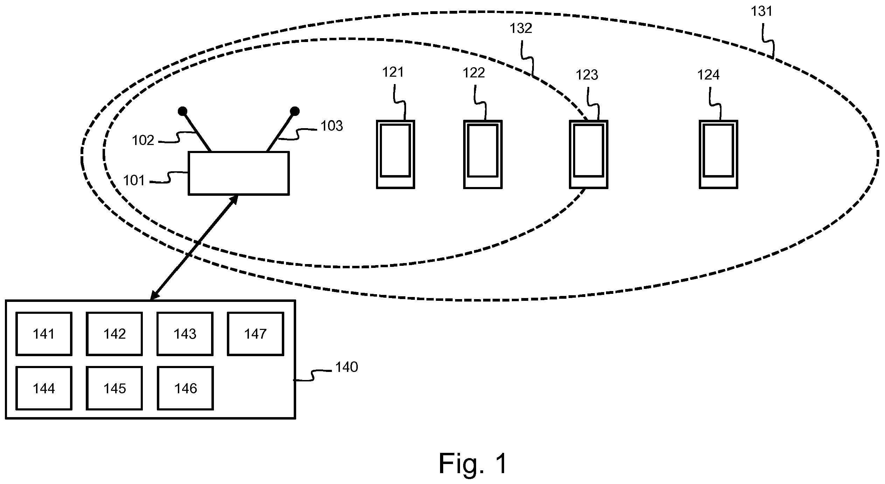

Fig. 1 illustrates a Wi-Fi network comprising an access point (AP) 101 and wireless stations or clients (STAs) 121-124. Fig. 1 further illustrates a networking device 140 according to an embodiment of the invention. The AP 101 comprises two wireless interfaces 102 and 103, each operating at a different frequency band, a lower and a higher, e.g. the 2.4GHz and the 5GHz frequency band. The coverage area of the lower frequency band is illustrated by coverage 131, while the coverage area of the higher frequency band is illustrated by coverage 132. In the example of Fig. 1 the STAs 121-124 are initially all connected to the AP 101 at the lower frequency band through the interface 102. This exemplary wireless network will be used further in this disclosure to illustrate the functionality of the networking device 140.

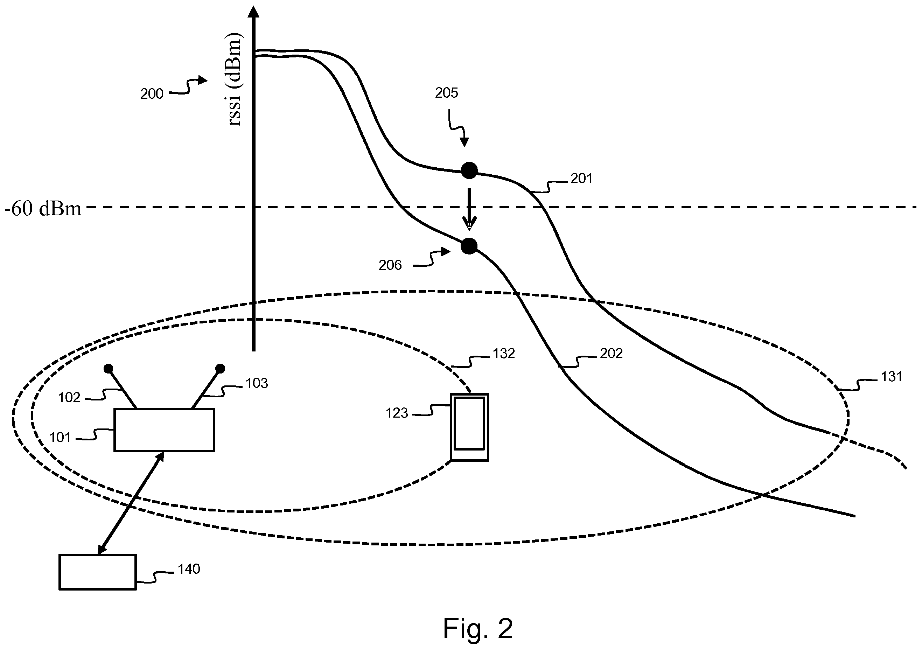

Fig. 2 illustrates signal strength values of STAs and coverages of frequency bands of the AP 101 in different locations of a Wi-Fi network according to an embodiment of the invention. Signal strength values or received signal strength indicators (RSSIs) are illustrated in graph 201 and graph 202, whereas graph 201 corresponds to the RSSIs of the lower frequency band and graph 202 corresponds to the RSSIs of the higher frequency band. The RSSI values are expressed in dBm 200.

When moving away from the AP 101, but also when switching from the lower to the higher frequency bands, the RSSI values decreases as illustrated by graphs 201 and 202. In Fig. 2 the STA 123 is located at the limit of the coverage 132 of the higher frequency band. When it is initially connected to the AP 101 through the lower frequency band over the wireless interface 102 and switches to the higher frequency band over the wireless interface 103, a drop in RSSI may occur. This is illustrated by point 205 and subsequently point 206, which illustrate the RSSI value of STA 123 at the lower respectively higher frequency band. When the RSSI value exceeds a predetermined threshold, for example -60dBm, a connection between the STA 123 and the AP 101 may be lost.

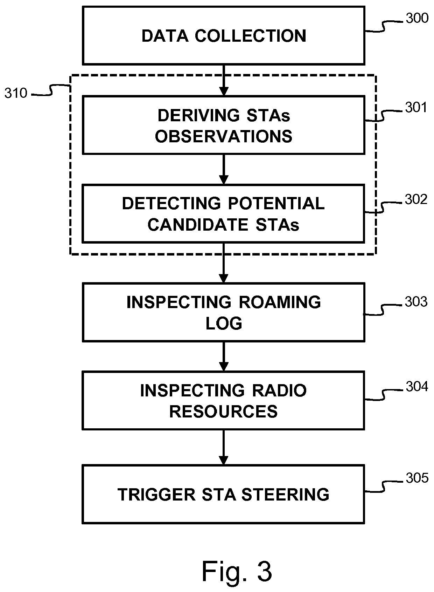

The networking device 140 steers the frequency bands of the STA 121-124 in order to avoid such an abrupt loss of connection. Fig. 3 illustrates steps performed by the networking device 140 for steering frequency bands of STAs 121-124 according to an embodiment of the invention.

First, the networking device 140 collects 300 operating parameters through a collection module 141. The operating parameters are either related to the AP 101, to an STA 121-124, or to both the AP 101 and the STAs 121-124. The operating parameters are standardized by the Broadband Forum TR-181 standard and may for example be retrieved, but not limited thereto, by the following attributes:

- *Device. WiFi.Radio.{i}.Stats.BytesSent,*
- *Device.WiFi.Radio.{i}.Stats.BytesReceived,*
- *Device.WiFi.Radio.{i}.OperatingFrequencyBand,*
- *Device.WiFi.Radio.{i}CCARequest,*
- *Device.WiFi.Radio.{i}CCAReport,*
- *Device.WiFi.Radio.{i}.Stast.ErrosSent,*
- *Device.WiFi.Radio.{i}.Stats.PacketsSent,*
- *Device.WiFi.SSID.{i}.Stats.RetransCount,*
- *Device.WiFi.SSID.{i}.Stats.FailedRetransCount,*
- *Device.WiFi.AccesPoint.{i}.AssociatedDeviceNumberOfEntries,*
- *Device.WiFi.NeighboringWiFiDiagnostic.Result.{i},*
- *Device.WiFi.AccesPoint.{i}.AC{i}.OutQLenHistogramIntervals,*
- *Device.WiFi.AccesPoint.{i}.AC{i}.Stats.OutQlenHistogram,*
- *Device.WiFi.AccesPoint.{j}.AssociatedDevice.{i}.SignalStrength,*
- *Device.WiFi.AccesPoint.{j}.AssociatedDevice.{i}.AuthenticationState,*
- *Device.WiFi.AccesPoint.{i}.Enable,*
- *Device.WiFi.AccesPoint.*.AssociatedDevice.*.Stats.BytesSent,*
- *Device.WiFi.AccesPoint.*.AssociatedDevice.*.Stats.BytesReceived,*
- *Device.WiFi.AccesPoint.*.AssociatedDevice.*.Stats.ErrorsSent,*
- *Device.WiFi.AccesPoint.*.AssociatedDevice.*.Stats.RetransCount.*

The attributes may be retrieved from the AP 101 and the STAs 121-124 at, for example, a fixed sampling frequency.

In the next steps 310 the STAs 121-124 are classified and STAs are identified from which their respective frequency band is deemed to steer. The objective is to detect 302 potential candidate STAs for which it is beneficial to steer frequency bands.

First, the operating parameters are used to derive 301 four scores per STA which are connected to the AP 101 through the lower frequency band, namely a mobility score, a coverage score, an activity score and a connection continuity score. These derivations are performed by the collection module 141.

The mobility score reflects the mobility of the respective STA in the environment. In other words, it expresses movements of an STA relative to the AP 101. A way to determine these movements in an indirect way is through the monitoring of variation of RSSI values over the first time interval. If, for example, a variation during the first time interval is less than a predefined threshold, such a STA is identified as static. When the variation is at least equal to said threshold, the STA is identified as dynamic. Another way to identify an STA as either static or dynamic may be based on a variation of the retransmission and/or error rate, whether or not combined with higher order derivatives of these values during the first time interval.

The coverage score reflects an STA proximity to the AP 101. In other words, it reflects how close an STA is located to the AP 101 during the first time interval. It may be calculated as a difference between the emitted power of the AP 101, expressed as PowAP and a mean value of RSSI values of an STA, expressed as mean{RSSI}, and a standard deviation of RSSI values of an STA, expressed as stdev{RSSI}, during the first time interval. The coverage score, expressed as CovScore, may thus be calculated as follows:

$$CovScore = \frac{100 - PowAp - mean\{RSSI\} + stdev\{RSSI\}}{100} \qquad \text{(eq. 1)}.$$

The activity score is indicative how active an STA is during the first time interval. It is, for example, calculated as a ratio of transmitted packets over received packets during this first time interval.

The connection continuity score reflects how continuous a STA is connected to the AP 101 during the first time interval. It may thus, for example, be calculated as a ratio of a connection time of a STA to the AP 101 over the first time interval.

For each of the STAs 121-124, the four scores are thus determined. In the illustrative example of Fig. 1, the STA 121 is considered to be, for example, a smart TV and thus, in general, stationary. STA 122 is considered to be a tablet from which its user is locally moving around in a moderate manner during the first time interval. STA 123 is considered to be a smart phone from which its user is also moving around in a moderate manner during the first time interval. Finally, STA 124 is considered to be a computer wirelessly connected to the AP 101.

All of the STAs 121-124 are considered to be sufficiently active and continuously connected to the AP 101. Thus, they all have an activity and connection continuity score exceeding a respective predefined threshold.

The STA 121-123 are considered to be relatively close to the AP 101, while the STA 124 is considered to be located relatively remote from the AP 101. Thus, STAs 121-123 are considered to have a respective coverage score which exceeds a predefined threshold, while the coverage score of the STA 124 is below said predefined threshold.

STA 121-124 are considered to be either stationary, such as STA 121 and 124, or to move around in a moderate manner during the first time interval, such as STA 122 and 123. In other words, STAs 121-124 all have a respective mobility score which is below a predefined threshold.

Next, a selection module selects STAs which are connected to the AP 101 at the lower frequency band during the first time interval, have a coverage, an activity and a connection continuity score exceeding a respective predefined threshold and a mobility score below a predefined threshold. Thus, given the above-mentioned considerations, the selection module 142 selects STA 121-123, while STA 124 doesn't belong to a first selection. As a result, potential candidate STAs are detected 302, namely the STA 121-123, from which it may be beneficial to steer frequency bands.

Subsequently, a classification module 143 makes a classification between the selected STAs 121-123. This classification is based on the number of roaming events of a STA during a second time interval by inspecting 303 their roaming log. Preferably, this second time interval is substantially larger than the first time interval. A roaming event is the occurrence of a switching or steering of frequency bands of a STA when connected to the AP 101.

STA 121 is considered not to steer from the lower frequency band to the higher frequency band during the second time interval. STA 122 is considered to locally move around in a moderate manner during the second time interval. During these movements, a moderate amount of roaming events occurs, i.e. a steering from frequency bands. STA 123 is considered to locally move around in an excessively manner during in the second time interval, whereby STA 123 leaves and re-enters the coverage area 132 of the higher frequency band.

Based on these roaming events, STA 121 is classified as static since it has no roaming events. STA 122 is classified as minorly dynamic since it has a moderate amount of roaming events. STA 123 is classified as majorly dynamic since the number of roaming events exceeds said amount.

Prior to the steering of frequency bands, a radio analyser 144 inspects 304 the AP 101 resources. This inspection 304 comprises two steps, namely to forecast an available channel utilization of the AP 101 at the higher frequency band and to calculate a required channel utilization of the static 121 and minorly dynamic 122 STAs.

Based on this forecast and calculation, a selection algorithm decide from which STA of the static and minorly dynamic STAs their respective frequency band is steered from the lower to the higher one. When, for example, the available channel utilization of the AP 101 exceeds the required channel utilization of the static 121 and minorly dynamic 122 STAs, the frequency bands of both STA 121 and 122 may be steered from the lower to the higher frequency band. If the required channel utilization exceeds the available channel utilization, than only the frequency band of the static STA 121 is steered. The selection algorithm may further be based on other parameters combined with the available and required channel utilization, such as for example service level agreements, such that only a part of STAs are selected from which their frequency band is steered.

Finally, a steering module 145 steers 305 the frequency band which are selected by the selection algorithm.

According to an embodiment of the invention, the networking device comprises, besides the collection module 141, the selection module 142, the classification module 143, the radio analyser 144 and the steering module 145, further a tagging module 145 and/or a notification module 147.

The tagging module 146 is configured to tag a STA as steering static such that the tagged STA is not able to steer frequency bands after that it is tagged.

For example, when the frequency band of the static STA 121 is steered from the lower frequency band to the higher frequency band, is may be tagged as steering static. Since the STA 121 is located close to the AP 101 and it is unlikely that it will move, it is thus advantageously to prevent future steering. The minorly dynamic STA 122 may be moved, so this STA 122 is not tagged by the tagging module 145.

According to an embodiment, the tagging module is also configured to tag the majorly dynamic STAs, such as STA 123. If the STA 123 steers from the lower frequency band to the higher one during the second time interval, the steering module 145 first steers the frequency band from the higher one to the lower one and subsequently, the STA 123 is tagged as steering static. In this way, STA 123 is prevented to steer frequency bands.

Obviously, it should be avoided that a steering static STA would perpetually be connected with the AP 101 at a given frequency band. Therefore, the networking device 140 may be triggered periodically, for example, every twenty-four hours, such that the steering of frequency bands is executed all over again. The triggering may also be initiated upon an event, for example, the presences of neighboring APs or an increase of connected STAs.

The notification module 147 is configured is configured to send a notification to a STA comprising instructions to a user of a STA how to steer from a frequency band to another frequency band. According to an embodiment of the invention, the steering may also be performed automatically by the networking device 140.

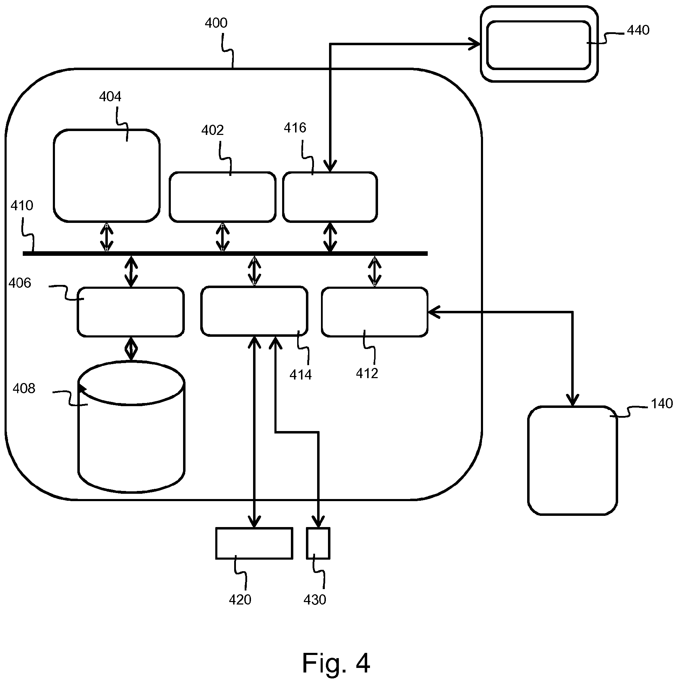

Fig. 4 shows details of the computing system 140 according to a further embodiment of the invention. Computing system 140 is suitable for performing the steps according to the above embodiments. Computing system 140 may also be incorporated in or used as access point 101. Computing system 140 may in general be formed as a suitable general-purpose computer and comprise a bus 410, a processor 402, a local memory 404, one or more optional input interfaces 414, one or more optional output interfaces 416, a communication interface 412, a storage element interface 406 and one or more storage elements 408. Bus 410 may comprise one or more conductors that permit communication among the components of the computing system 140. Processor 402 may include any type of conventional processor or microprocessor that interprets and executes programming instructions. Local memory 404 may include a random-access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator to input information to the computing device 140, such as a keyboard 420, a mouse 430, a pen, voice recognition and/or biometric mechanisms, etc. Output interface 416 may comprise one or more conventional mechanisms that output information to the operator, such as a display 440, etc. Communication interface 412 may comprise any transceiver-like mechanism such as for example one or more Ethernet interfaces that enables computing system 140 to communicate with other devices and/or systems, for example with access point 101. The communication interface 412 of computing system 140 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used. The system 140 described above can also run as a virtual machine above the physical hardware.

## Claims

1. A networking device (140) for steering frequency bands of associated devices, STAs (121-124), connected to an Access Point, AP, (101) capable of operating through a higher and a lower frequency band of the frequency bands, the networking device (140) comprising:

   - a collection module (141) configured to collect operating parameters from the AP (101) and the STAs (121-124) and to derive therefrom for the STAs (121-124) a respective mobility score, a respective coverage score, a respective activity score and a respective connection continuity score; and

   **CHARACTERIZED IN THAT**

   - a mobility score is indicative for a Received Signal Strength Indicator, RSSI variation of the respective STA during the predetermined first time interval; and
   - a coverage score is indicative for a difference between an emitted signal strength power of the AP and a received signal strength indicator, RSSI, of the respective STA during the predetermined first time interval; and
   - an activity score is indicative for a ratio of transmitted over received packets by the respective STA during the predetermined first time interval; and
   - a connection continuity score is indicative for a ratio of a connection time of the respective STA to the AP over the predetermined first time interval,

   the networking device further comprising

   - a selection module (142) configured to select a first selection of STAs that are connected to the AP at the lower frequency band during a predetermined first time interval and have:

o a coverage, an activity and a connection continuity score exceeding a respective predefined threshold; and
o a mobility score below a predefined threshold; and

- a classification module (143) configured to classify the STAs of the first selection based on roaming events during a predetermined second time interval, the second time interval being larger than the first time interval, as:

o static when no roaming event occurred; and
o minorly dynamic when the number of roaming events that occurred stays below or equals a predefined amount; and
o majorly dynamic when the number of roaming events that occurred exceeds said predefined amount; and

- a radio analyser (144) configured to:

o forecast resources of the AP thereby obtaining an available channel utilization of the AP at the higher frequency band; and
o calculate a required channel utilization of the static and minorly dynamic STAs; and

- a steering module (145) configured to steer the frequency band of static and/or minorly dynamic STAs from the lower to the higher frequency band by way of a selection algorithm based on the available channel utilization and required channel utilization.

2. Networking device (140) according to claim 1, wherein the steering module is further configured to steer:

- the frequency band of the static and minorly dynamic STAs from the lower frequency band to the higher frequency band when the available channel utilization is at least equal to the required channel utilization; or
- the frequency band of only the static STAs from the lower frequency band to the higher frequency band when the available channel utilization is less than the required channel utilization.

3. Networking device according to claim 1, wherein the operating parameters comprise at least one of the group of:

- a data consumption volume of the AP and/or the STAs; and/or
- an operating frequency band of the AP and/or the STAs; and/or
- an activity factor of the STAs and/or AP; and/or
- a buffer state of the AP; and/or
- a number of neighboring APs of the AP; and/or
- a number of connected devices to the AP; and/or
- a channel utilization parameter of the AP; and/or
- a retransmission rate of the STAs; and/or
- an authentication state of the STAs; and/or
- an error rate of the STA; and/or
- a hostname of the STAs; and/or
- an operating standard of the STAs; and/or
- a connection time of the STAs; and/or
- received signal strength indications, RSSI, of the STAs.

4. Networking device (140) according to claim 1, further comprising a tagging module (146) configured to tag a STA as steering static thereby inhibiting the tagged STA to steer frequency bands; and wherein the steering module (145) is further configured to instruct the tagging module (146) to tag a static STA as steering static after the steering of the frequency band of the static STA from the lower frequency band to the higher frequency band.

5. Networking device (140) according to claim 4, wherein the steering module is further configured:

- to steer the frequency band of the majorly dynamic STAs from the higher frequency band to the lower frequency band; and subsequently
- to instruct the tagging module to tag the majorly dynamic STAs as steering static.

6. Networking device (140) according to claim 1, wherein the lower frequency band is the 2.4GHz frequency band and the higher frequency band is the 5GHz frequency band.

7.  Networking device (140) according to claim 1, further comprising a notification module (147) configured to send a notification to an STA, the notification comprising instructions to a user of the STA to steer from a frequency band to another frequency band.

8.  Method for steering frequency bands of associated devices, STAs (121-124), connected to an Access Point, AP, (101) capable of operating through a higher and a lower frequency band of the frequency bands, the method comprising:

    - collecting operating parameters from the AP (101) and the STAs (121-124) and deriving therefrom for the STAs (121-124) a respective mobility score, a respective coverage score, a respective activity score and a respective connection continuity score; and
    - selecting a first selection of STAs that are connected to the AP at the lower frequency band during a predetermined first time interval and have:

        o a coverage, an activity and a connection continuity score exceeding a respective predefined threshold; and
        o a mobility score below a predefined threshold;

    **CHARACTERIZED IN THAT**

    - a mobility score is indicative for a Received Signal Strength Indication, RSSI, variation of the respective STA during the predetermined first time interval; and
    - a coverage score is indicative for a difference between an emitted signal strength power of the AP and a received signal strength indicator, RSSI, of the respective STA during the predetermined first time interval; and
    - an activity score is indicative for a ratio of transmitted over received packets by the respective STA during the predetermined first time interval; and
    - a connection continuity score is indicative for a ratio of a connection time of the respective STA to the AP over the predetermined first time interval,

    the method further comprising

    - classifying the STAs of the first selection based on roaming events during a predetermined second time interval, the second time interval being larger than the first time interval, as:

        o static when no roaming event occurred; and
        o minorly dynamic when the number of roaming events that occurred stays below or equals a predefined amount; and
        o majorly dynamic when the number of roaming events that occurred exceeds said predefined amount; and

    - forecasting resources of the AP thereby obtaining an available channel utilization of the AP at the higher frequency band; and
    - calculating a required channel utilization of the static and minorly dynamic STAs; and
    - steering the frequency band of static and/or minorly dynamic STAs from the lower to the higher frequency band by way of a selection algorithm based on the available channel utilization and required channel utilization.

9.  A computer program product comprising computer-executable instructions for performing the method according to claim 8 when the program is run on a computer.

10. A computer readable storage medium comprising the computer product according to claim 9.

11. A data processing system programmed for carrying out the method according to claim 8

**Patentansprüche**

1.  Vernetzungsvorrichtung (140) zum Leiten von Frequenzbändern zugeordneter Vorrichtungen, STAs (121-124), die mit einem Zugangspunkt, AP, (101) verbunden sind, der in der Lage ist, über ein höheres und ein niedrigeres Frequenzband der Frequenzbänder zu arbeiten, wobei die Vernetzungsvorrichtung (140) Folgendes umfasst:

- ein Sammelmodul (141), das konfiguriert ist, Betriebsparameter des AP (101) und der STAs (121-124) zu sammeln und daraus für die STAs (121-124) eine jeweilige Mobilitätsbewertung, eine jeweilige Abdeckungsbewertung, eine jeweilige Aktivitätsbewertung und eine jeweilige Verbindungskontinuitätsbewertung abzuleiten;

**dadurch gekennzeichnet, dass**

- eine Mobilitätsbewertung eine Empfangssignalstärkenindikator-Schwankung, RSSI-Schwankung, der jeweiligen STA während des vorgegebenen ersten Zeitintervalls angibt;
- eine Abdeckungsbewertung eine Differenz zwischen einer Sendesignalstärkeleistung des AP und einem Empfangssignalstärkeindikator, RSSI, der jeweiligen STA während des vorgegebenen ersten Zeitintervalls angibt;
- eine Aktivitätsbewertung ein Verhältnis durch die jeweilige STA gesendeter über empfangener Pakete während des vorgegebenen ersten Zeitintervalls angibt; und
- eine Verbindungskontinuitätsbewertung ein Verhältnis einer Verbindungszeit der jeweiligen STA zum AP über dem vorgegebenen ersten Zeitintervall angibt, wobei

die Vernetzungsvorrichtung ferner Folgendes umfasst:

- ein Wahlmodul (142), das konfiguriert ist, eine erste Auswahl STAs zu wählen, die während eines vorgegebenen ersten Zeitintervalls im unteren Frequenzband mit dem AP verbunden sind und Folgendes besitzen:

  • eine Abdeckungs-, eine Aktivitäts- und eine Verbindungskontinuitätsbewertung, die einen jeweiligen vordefinierten Schwellenwert überschreiten; und
  • eine Mobilitätsbewertung unter einem vordefinierten Schwellenwert; und

- ein Klassifizierungsmodul (143), das konfiguriert ist, die STAs der ersten Auswahl auf der Grundlage von Roaming-Ereignissen während eines vorgegebenen zweiten Zeitintervalls, wobei das zweite Zeitintervall größer als das erste Zeitintervall ist, als Folgendes zu klassifizieren:

  • statisch, wenn kein Roaming-Ereignis aufgetreten ist;
  • geringfügig dynamisch, wenn die Anzahl von Roaming-Ereignissen, die aufgetreten sind, unter oder gleich einem vorgegebenen Betrag ist; und
  • hauptsächlich dynamisch, wenn die Anzahl von Roaming-Ereignissen, die aufgetreten sind, den vorgegebenen Betrag überschreitet;

- eine Funkanalyseeinrichtung (144), die konfiguriert ist zum

  • Vorhersagen von Betriebsmitteln des AP, wodurch eine verfügbare Kanalverwendung des AP im höheren Frequenzband erhalten wird; und
  • Berechnen einer erforderlichen Kanalverwendung der statischen und der geringfügig dynamischen STAs und

- ein Leitmodul (145), das konfiguriert ist zum Leiten des Frequenzbands statischer und/oder geringfügig dynamischer STAs vom niedrigeren zum höheren Frequenzband in Form eines Wahlalgorithmus auf der Grundlage der verfügbaren Kanalverwendung und der erforderlichen Kanalverwendung.

**2.** Vernetzungsvorrichtung (140) nach Anspruch 1, wobei das Leitmodul ferner konfiguriert ist zum Leiten

- des Frequenzbands der statischen und geringfügig dynamischen STAs vom niedrigeren Frequenzband zum höheren Frequenzband, wenn die verfügbare Kanalverwendung mindestens gleich der erforderlichen Kanalverwendung ist; oder
- des Frequenzbands lediglich der statischen STAs vom niedrigeren Frequenzband zum höheren Frequenzband, wenn die verfügbare Kanalverwendung weniger als die erforderliche Kanalverwendung ist.

**3.** Vernetzungsvorrichtung nach Anspruch 1, wobei die Betriebsparameter mindestens einen der folgenden Gruppe umfassen:

- ein Datenverbrauchsvolumen des AP und/oder der STAs und/oder
- ein Betriebsfrequenzband des AP und/oder der STAs und/oder

- einen Aktivitätsfaktor der STAs und/oder des AP und/oder
- einen Pufferzustand des AP und/oder
- eine Anzahl benachbarter APs des AP und/oder
- eine Anzahl mit dem AP verbundener Vorrichtungen und/oder
- einen Kanalverwendungsparameter des AP und/oder
- einer Wiederübertragungsrate der STAs und/oder
- einen Authentifizierungszustand der STAs und/oder
- eine Fehlerrate der STA und/oder
- einen Host-Namen der STAs und/oder
- eine Betriebsnorm der STAs und/oder
- eine Verbindungszeit der STAs und/oder
- Empfangssignalstärkeangaben, RSSI, der STAs.

4. Vernetzungsvorrichtung (140) nach Anspruch 1, die ferner ein Markierungsmodul (146) umfasst, das konfiguriert ist, eine STA als statisch leitend zu markieren, wodurch gehemmt wird, dass die markierte STA Frequenzbänder leitet; und wobei das Leitmodul (145) ferner konfiguriert ist, das Markierungsmodul (146) anzuweisen, eine statische STA nach dem Leiten des Frequenzbands der statischen STA vom niedrigeren Frequenzband zum höheren Frequenzband als statisch leitend zu markieren.

5. Vernetzungsvorrichtung (140) nach Anspruch 4, wobei das Leitmodul ferner konfiguriert ist zum

- Leiten des Frequenzbands der hauptsächlich dynamischen STAs vom höheren Frequenzband zum niedrigeren Frequenzband und anschließenden
- Anweisen des Markierungsmoduls, die hauptsächlich dynamischen STAs als statisch leitend zu markieren.

6. Vernetzungsvorrichtung (140) nach Anspruch 1, wobei das niedrigere Frequenzband das 2,4 GHz-Frequenzband ist und das höhere Frequenzband das 5 GHz-Frequenzband ist.

7. Vernetzungsvorrichtung (140) nach Anspruch 1, das ferner ein Benachrichtigungsmodul (147) umfasst, das konfiguriert ist, eine Benachrichtigung zu einer STA zu senden, wobei die Benachrichtigung Anweisungen an einen Anwender der STA umfasst, von einem Frequenzband zu einem weiteren Frequenzband zu leiten.

8. Verfahren zum Leiten von Frequenzbändern zugeordneter Vorrichtungen, STAs (121-124), die mit einem Zugangspunkt, AP, (101) verbunden sind, der in der Lage ist, über ein höheres und ein niedrigeres Frequenzband der Frequenzbänder zu arbeiten, wobei das Verfahren Folgendes umfasst:

- Sammeln von Betriebsparameter des AP (101) und der STAs (121-124) und daraus Ableiten für die STAs (121-124) einer jeweiligen Mobilitätsbewertung, einer jeweiligen Abdeckungsbewertung, einer jeweiligen Aktivitätsbewertung und einer jeweiligen Verbindungskontinuitätsbewertung; und
- Wählen einer ersten Auswahl STAs, die während eines vorgegebenen ersten Zeitintervalls im unteren Frequenzband mit dem AP verbunden sind und Folgendes besitzen:

  • eine Abdeckungs-, eine Aktivitäts- und eine Verbindungskontinuitätsbewertung, die einen jeweiligen vordefinierten Schwellenwert überschreiten; und
  • eine Mobilitätsbewertung unter einem vordefinierten Schwellenwert;

**dadurch gekennzeichnet, dass**

- eine Mobilitätsbewertung eine Empfangssignalstärkenindikator-Schwankung, RSSI-Schwankung, der jeweiligen STA während des vorgegebenen ersten Zeitintervalls angibt;
- eine Abdeckungsbewertung eine Differenz zwischen einer Sendesignalstärkeleistung des AP und einem Empfangssignalstärkeindikator, RSSI, der jeweiligen STA während des vorgegebenen ersten Zeitintervalls angibt;
- eine Aktivitätsbewertung ein Verhältnis durch die jeweilige STA gesendeter über empfangener Pakete während des vorgegebenen ersten Zeitintervalls angibt; und
- eine Verbindungskontinuitätsbewertung ein Verhältnis einer Verbindungszeit der jeweiligen STA zum AP über dem vorgegebenen ersten Zeitintervall angibt, wobei

das Verfahren ferner Folgendes umfasst:

- Klassifizieren der STAs der ersten Auswahl auf der Grundlage von Roaming-Ereignissen während eines vorgegebenen zweiten Zeitintervalls, wobei das zweite Zeitintervall größer als das erste Zeitintervall ist, als Folgendes:

  • statisch, wenn kein Roaming-Ereignis aufgetreten ist;
  • geringfügig dynamisch, wenn die Anzahl von Roaming-Ereignissen, die aufgetreten sind, unter oder gleich einem vorgegebenen Betrag ist; und
  • hauptsächlich dynamisch, wenn die Anzahl von Roaming-Ereignissen, die aufgetreten sind, den vorgegebenen Betrag überschreitet;

- Vorhersagen von Betriebsmitteln des AP, wodurch eine verfügbare Kanalverwendung des AP im höheren Frequenzband erhalten wird;
- Berechnen einer erforderlichen Kanalverwendung der statischen und der geringfügig dynamischen STAs und
- Leiten des Frequenzbands statischer und/oder geringfügig dynamischer STAs vom niedrigeren zum höheren Frequenzband in Form eines Wahlalgorithmus auf der Grundlage der verfügbaren Kanalverwendung und der erforderlichen Kanalverwendung.

**9.** Computerprogrammprodukt, das computerausführbare Anweisungen enthält, um das Verfahren nach Anspruch 8 durchzuführen, wenn das Programm in einem Computer ausgeführt wird.

**10.** Computerlesbares Speichermedium, das das Computerprodukt nach Anspruch 9 enthält.

**11.** Datenverarbeitungssystem, das zum Ausführen des Verfahrens nach Anspruch 8 programmiert ist.

**Revendications**

**1.** Dispositif de réseautage (140) destiné à orienter des bandes de fréquences de dispositifs associés, STA (121-124), connecté à un point d'accès AP (101) capable de fonctionner dans une bande de fréquences supérieure et une bande de fréquences inférieure des bandes de fréquences, le dispositif de réseautage (140) comprenant :

- un module de collecte (141) configuré pour collecter des paramètres de fonctionnement à partir de l'AP (101) et des STA (121-124) et de dériver à partir de ceux-ci pour les STA (121-124) un score de mobilité respectif, un score de couverture respectif, un score d'activité respectif et un score de continuité de connexion respectif ; et

**CARACTERISE EN CE QUE**

- un score de mobilité est indicatif d'une variation d'indicateur de force de signal reçu RSSI du STA respectif durant le premier intervalle de temps prédéterminé ; et
- un score de couverture est indicatif d'une différence entre une puissance de force de signal émise de l'AP et un indicateur de force de signal reçu, RSSI, du STA respectif durant le premier intervalle de temps prédéterminé ; et
- un score d'activité est indicatif d'un rapport de paquets transmis sur paquets reçus par le STA respectif durant le premier intervalle de temps prédéterminé ; et
- un score de continuité de connexion est indicatif d'un rapport d'une durée de connexion du STA respectif à l'AP sur le premier intervalle de temps prédéterminé,

le dispositif de réseautage comprenant en outre

- un module de sélection (142) configuré pour sélectionner une première sélection de STA qui sont connectés à l'AP au niveau de la bande de fréquences inférieure durant un premier intervalle de temps prédéterminé et présentent :

  ◦ un score de couverture, d'activité et de continuité de connexion qui dépasse un seuil prédéfini respectif ; et
  o un score de mobilité inférieur à un seuil prédéfini ; et

- un module de classification (143) configuré pour classifier les STA de la première sélection sur la base d'événements d'itinérance durant un second intervalle de temps prédéterminé, le second intervalle de temps étant plus long que le premier intervalle de temps, comme étant :

  ◦ statiques quand aucun événement d'itinérance ne s'est produit ; et
  ◦ en minorité dynamiques quand le nombre d'événements d'itinérance qui se sont produits est inférieur ou égal à une quantité prédéfinie ; et
  ◦ en majorité dynamiques quand le nombre d'événements d'itinérance qui se sont produits dépasse ladite quantité prédéfinie ; et

- un analyseur radio (144) configuré pour :

  ◦ prévoir des ressources de l'AP obtenant ainsi une utilisation de canal possible de l'AP au niveau de la bande de fréquences supérieure ; et
  ◦ calculer une utilisation de canal requise des STA statiques et en minorité dynamiques ; et

- un module d'orientation (145) configuré pour orienter la bande de fréquences des STA statiques et/ou en minorité dynamiques de la bande de fréquences inférieure vers la bande de fréquences supérieure au moyen d'un algorithme de sélection basé sur l'utilisation de canal possible et l'utilisation de canal requise.

2. Dispositif de réseautage (140) selon la revendication 1, dans lequel le module d'orientation est configuré en outre pour orienter :

   - la bande de fréquences des STA statiques et en minorité dynamiques de la bande de fréquences inférieure vers la bande de fréquences supérieure quand l'utilisation de canal possible est au moins égale à l'utilisation de canal requise ; ou
   - la bande de fréquences des STA statiques uniquement de la bande de fréquences inférieure vers la bande de fréquences supérieure quand l'utilisation de canal possible est inférieure à l'utilisation de canal requise.

3. Dispositif de réseautage selon la revendication 1, dans lequel les paramètres de fonctionnement comprennent au moins un du groupe comportant :

   - un volume de consommation de données de l'AP et/ou des STA ; et/ou
   - une bande de fréquences de fonctionnement de l'AP et/ou des STA ; et/ou
   - un facteur d'activité des STA et/ou de l'AP ; et/ou
   - un état de mémoire tampon de l'AP ; et/ou
   - un nombre d'AP voisins de l'AP; et/ou
   - un nombre de dispositifs connectés à l'AP ; et/ou
   - un paramètre d'utilisation de canal de l'AP ; et/ou
   - un taux de retransmissions des STA ; et/ou
   - un état d'authentification des STA ; et/ou
   - un taux d'erreurs des STA ; et/ou
   - un nom d'hôte des STA ; et/ou
   - une norme de fonctionnement des STA ; et/ou
   - une durée de connexion des STA ; et/ou
   - des indications de force de signal reçu, RSSI, des STA.

4. Dispositif de réseautage (140) selon la revendication 1, comprenant en outre un module de balisage (146) configuré pour baliser un STA comme étant statique en terme d'orientation empêchant ainsi le STA balisé de changer de bande de fréquences ; et dans lequel le module d'orientation (145) est configuré en outre pour donner instruction au module de balisage (146) de baliser un STA statique comme étant statique en terme d'orientation après l'orientation de la bande de fréquences du STA statique de la bande de fréquences inférieure vers la bande de fréquences supérieure.

5. Dispositif de réseautage (140) selon la revendication 4, dans lequel le module d'orientation est configuré en outre pour :

   - orienter la bande de fréquences des STA en majorité dynamiques de la bande de fréquences supérieure vers la bande de fréquences inférieure ; et subséquemment
   - donner instruction au module de balisage de baliser les STA en majorité dynamiques comme étant statiques en terme d'orientation.

6. Dispositif de réseautage (140) selon la revendication 1, dans lequel la bande de fréquences inférieure est la bande de fréquences de 2,4GHz et la bande de fréquences supérieure est la bande de fréquences de 5GHz.

7. Dispositif de réseautage (140) selon la revendication 1, comprenant en outre un module de notification (147) configuré pour envoyer une notification à un STA, la notification comprenant des instructions adressées à un utilisateur du STA de passer d'une bande de fréquences à une autre bande de fréquences.

8. Procédé d'orientation de bandes de fréquences de dispositifs associés, STA (121-124), connectés à un AP (101) capable de fonctionner dans une bande de fréquences supérieure et une bande de fréquences inférieure des bandes de fréquences, le procédé comprenant :

- la collecte de paramètres de fonctionnement de l'AP (101) et des STA (121-124) et la dérivation à partir de ceux-ci pour les STA (121-124) d'un score de mobilité respectif, d'un score de couverture respectif, d'un score d'activité respectif et d'un score de continuité de connexion respectif ; et
- la sélection d'une première sélection de STA qui sont connectés à l'AP au niveau de la bande de fréquences inférieure durant un premier intervalle de temps prédéterminé et présentent :

  o un score de couverture, d'activité et de continuité de connexion qui dépasse un seuil prédéfini respectif ; et
  o un score de mobilité inférieur à un seuil prédéfini ;

**CARACTERISE EN CE QUE**

- un score de mobilité est indicatif d'une variation d'indicateur de force de signal reçu RSSI du STA respectif durant le premier intervalle de temps prédéterminé ; et
- un score de couverture est indicatif d'une différence entre une puissance de force de signal émise de l'AP et un indicateur de force de signal reçu, RSSI, du STA respectif durant le premier intervalle de temps prédéterminé ; et
- un score d'activité est indicatif d'un rapport de paquets transmis sur paquets reçus par le STA respectif durant le premier intervalle de temps prédéterminé ; et
- un score de continuité de connexion est indicatif d'un rapport d'une durée de connexion du STA respectif à l'AP sur le premier intervalle de temps prédéterminé,

le procédé comprenant en outre

- la classification des STA de la première sélection sur la base d'événements d'itinérance durant un second intervalle de temps prédéterminé, le second intervalle de temps étant plus long que le premier intervalle de temps, comme étant :

  ◦ statiques quand aucun événement d'itinérance ne s'est produit ; et
  ◦ en minorité dynamiques quand le nombre d'événements d'itinérance qui se sont produits est inférieur ou égal à une quantité prédéfinie ; et
  ◦ en majorité dynamiques quand le nombre d'événements d'itinérance qui se sont produits dépasse ladite quantité prédéfinie ; et

- la prévision de ressources de l'AP obtenant ainsi une utilisation de canal possible de l'AP au niveau de la bande de fréquences supérieure ; et
- le calcul d'une utilisation de canal requise des STA statiques et en minorité dynamiques ; et
- l'orientation de la bande de fréquences des STA statiques et/ou en minorité dynamiques de la bande de fréquences inférieure vers la bande de fréquences supérieure au moyen d'un algorithme de sélection basé sur l'utilisation de canal possible et l'utilisation de canal requise.

9. Produit-programme informatique comprenant des instructions exécutables par ordinateur pour réaliser le procédé selon la revendication 8 quand le programme est exécuté sur un ordinateur.

10. Support de mémorisation lisible par ordinateur comprenant le produit informatique selon la revendication 9.

**EP 3 445 131 B1**

11. Système de traitement de données programmé pour mettre en œuvre le procédé selon la revendication 8.

**16**

Fig. 1

Fig. 2

EP 3 445 131 B1

```
                  ┌─────────────────────────┐
                  │     DATA COLLECTION     │───300
                  └─────────────────────────┘
                              │
         ┌ ─ ─ ─ ─ ─ ─│─ ─ ─ ─ ─ ─ ─ ─ ─ ─ ┐
         │            ▼                       
    310──│  ┌─────────────────────────┐      │
         │  │      DERIVING STAs      │───301 
         │  │      OBSERVATIONS       │      │
         │  └─────────────────────────┘      
         │            │                      │
         │            ▼                       
         │  ┌─────────────────────────┐      │
         │  │   DETECTING POTENTIAL   │───302 
         │  │     CANDIDATE STAs      │      │
         │  └─────────────────────────┘       
         └ ─ ─ ─ ─ ─ ─│─ ─ ─ ─ ─ ─ ─ ─ ─ ─ ┘
                      ▼
            ┌─────────────────────────┐
            │   INSPECTING ROAMING    │───303
            │           LOG           │
            └─────────────────────────┘
                      │
                      ▼
            ┌─────────────────────────┐
            │    INSPECTING RADIO     │───304
            │       RESOURCES         │
            └─────────────────────────┘
                      │
                      ▼
            ┌─────────────────────────┐
            │   TRIGGER STA STEERING  │───305
            └─────────────────────────┘
```

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150382348 A1
- WO 2014142966 A1
- WO 2016197331 A1
- US 20160007278 A1
- US 8699418 B2